# EUROPEAN PATENT APPLICATION

(11) **EP 1 733 828 A1**
(43) Date of publication of application: **20.12.2006**
(21) Application number: 06253094.4
(22) Date of filing: 14.06.2006
(51) Int. Cl.: B23B 31/117

(54) **Tool holding structure**

(30) Priority: 14.06.2005 JP 2005173654
(71) Applicant: FANUC LTD, Minamitsuru-gun, Yamanashi 401-0597 (JP)
(72) Inventor: Kawai, Tomohiko, Minamitsuru-gun Yamanashi 401-0304 (JP); Ebihara, Kenzo, Fanuc, Minamitsuru-gun Yamanashi 401-0511 (JP); Ooki, Takeshi, Fanuc, Minamitsuru-gun Yamanashi 401-0511 (JP)
(74) Representative: Billington, Lawrence Emlyn

(57) **Abstract**

The invention provides a simplified holding structure for a tool for a machine tool that makes accurate tool holding possible. The tool shank (3) is inserted through a through hole of a sleeve (2) and into a tool shank insertion hole (11). An insertion part of the sleeve (2) is inserted into a large-diameter part (11a) of the tool shank insertion hole (11) and fixed coaxially to the spindle with bolts or the like (see figures 3a & 3b), so as to axially compress at least one annular elastic member (4) provided in the large-diameter part (11a) of the tool shank insertion hole (11). A first shank-supporting portion (A1) is provided inside the tool shank insertion hole (11) and a second shank-supporting portion (A2) is provided on the through hole of the sleeve (2). A front end part of the insertion part of the sleeve (2) may be semicircular or trapezoidal in axial cross-section (see figures 4a & 4b). The tool shank insertion hole (11), the through hole of the sleeve (2) and the annular elastic member (4) each has a cross-section in the direction perpendicular to the axis of the tool shank shaped to match (see figures 5a & 5b) the cross section of the tool shank (3).

## Description

### BACKGROUND OF THE INVENTION

### 1. Field of the Invention

The present invention relates to tool holding of a machine tool, and more particularly to a tool holding structure for holding and clamping a tool shank to a spindle of the machine tool.

### 2. Description of the Related Art

In the conventional art, collet chucks and hydraulic chucks are widely used for tool holding of machine tools. However, when a collet-type chuck is used, it is easy for tool mounting error to arise depending on the accuracy of the dimensions of the tapered portions of the collet and the spindle. In addition, mounting a mechanism like a hydraulic chuck on a small, high-speed spindle is unrealistic due to the design difficulties involved. Moreover, a variety of technologies relating to tool holding for machine tools have been proposed, and are also disclosed in patent publications.

JP 11-77413A is a typical example thereof, and discloses a bellows-shaped holder for holding a tool. This bellows-shaped holder has either an outer peripheral surface that is enclosed by the held member or an internal hole into which the held member is inserted, with one end surface of which being contacted against an annular reference body or an annular reference portion and the other end surface forming a cylindrical member having a flanged part. This cylindrical member is an elastic member, which, when the held member is attached, expands radially when compressed axially toward the one end described above so as to hold and fix the held member. Axial slits extending partway along the length of the bellows-shaped holder are provided in the peripheral surface of the bellows-shaped holder, in order to facilitate the radial expansion when compressed described above.

This sort of bellows can be seen as a type of elastic member. At the same time, the tool holding structure according to the present invention also utilizes an elastic member, and in that sense JP 11-77413A discloses the same general type of technology as that of the present invention. However, the way the shank (of the held member) is supported is completely different from that of the present invention. As is described in detail below, in the holding structure according to the present invention the tool shank is only supported at two places, that is, at both lateral sides of the elastic member (two locations along the axis of the tool), and this two-portion support facilitates simplification of the holding structure and enhancement of the accuracy of the hold on the tool.

The technique described in JP 11-77413A does not support the held object at two portions as the present invention does but instead clamps the shank of the tool over the entire inner surface of the bellows-shaped holder (see especially paragraph [0012]), and is clearly different from the two-portion support technique employed by the present invention. In other words, in the conventional art shown in JP 11-77413A, the shank is supported by a single portion on the inner circumference at the front end of the spindle. As a result, the tool shakes due to the angle of insertion and the like and there is a risk that an error arises in the orientation of the mounting.

In a machine tool, any imbalance in or inaccuracy in mounting of the tool affects machining, and therefore precise holding of the tool and repetitive accuracy of tool replacement are required. Moreover, a simpler, more precise tool holding structure is sought for the compact and high-speed spindle.

### SUMMARY OF THE INVENTION

The present invention proposes a tool holding structure that supports the tool shank in a two-portion supporting way to achieve a simple but accurate tool holding.

The present invention simplifies the tool holding structure for clamping the tool shank to the spindle of the machine tool and solves the problems described above by providing locations at which support is provided at two portions within the spindle and providing an elastic member that holds the tool between those two portions of support. In the present invention, the two portions of support are the sleeve provided on the spindle front end and the inner part of the spindle, with the elastic member disposed between the two portions of support compressed radially inward to fix the shank in place, and in so doing making simple but accurate tool holding possible.

A tool holding structure of the present invention comprises: a first shank-supporting portion provided by an inner peripheral surface of a part of a tool-shank insertion hole formed in the spindle; a second shank-supporting portion provided by an inner peripheral surface of a through hole formed in a sleeve mounted coaxially at an distal end of the spindle; at least one elastic member disposed between the first and second shank-supporting portions in a space formed between the tool shank insertion hole and the tool shank inserted therein; and compressing means for compressing the elastic member axially to expand the elastic member radially so that the tool shank is held and clamped on the spindle.

The elastic member may have an annular shape.

The compressing means may comprise the sleeve being mounted at the distal end of the spindle to apply a compressive force for compressing the elastic member from a portion thereof in contact with the elastic member.

The portion of the sleeve in contact with the elastic member may have a semicircle or trapezoid shape in axial cross-section.

The tool-shank insertion hole of the spindle, the through hole of the sleeve and the elastic member may have cross-sections matched with cross-sections of the tool shank on planes perpendicular to an axis of the spindle.

The tool holding structure according to the present invention is a simple one, thereby leading to improved reliability. In addition, provided that the shank supporting parts are made precisely and the tolerance between the outer diameter and the tool is minimized, the present invention can easily achieve precise tool holding even with the pin gauge class of tool shanks employed in tools used in ultra-precise machining applications.

### BRIEF DESCRIPTION OF THE DRAWINGS

FIG. 1 is a diagram showing a sectional view along the axis of a spindle, indicating the main features of a tool holding structure according to one embodiment of the present invention;
FIG. 2 is a diagram showing a sectional view along the axis of the spindle, illustrating a variation of the tool holding structure that provides multiple annular elastic members;
FIGS. 3a and 3b are diagrams showing sectional views along the axis of the spindle, illustrating a structure for holding a sleeve position that compresses the annular elastic members, in which FIG. 3a shows an example in which tightening is accomplished by bolts and FIG. 3b shows an example in which tightening is accomplished by a screw-nut structure formed on a sleeve and a spindle;
FIGS. 4a and 4b are diagrams illustrating the shape in cross-section of the sleeve where it compresses the elastic members, along the axis of he spindle, in which FIG. 4a shows an example in which the cross-section is trapezoidal in shape and FIG. 4b shows an example in which the cross-section is semicircular in shape; and
FIGS. 5a and 5b are diagrams showing a holding contact part of the tool holding structure, in which FIG. 5a shows a case in which the tool shank is circular in cross-section and FIG. 5b shows a case in which the tool shank is polygonal in cross-section.

### DETAILED DESCRIPTION

A detailed description will now be given of embodiments of the present invention, with reference to the accompanying drawings.

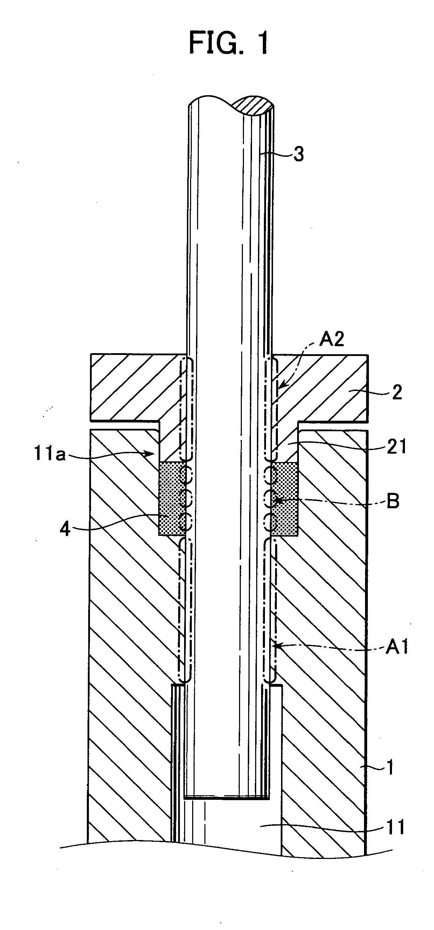

FIG. 1 is a diagram showing a sectional view along the axis of a spindle, indicating the main features of a tool holding structure according to one embodiment of the present invention. In FIG. 1, reference numeral 1 indicates the spindle of a machine tool, which has a tool shank insertion hole 11 extending axially along the spindle 1. Reference numeral 2 indicates a sleeve mounted coaxially on the spindle 1, having an insertion part 21 inserted into a large diameter part 11a formed on the entry side of the tool shank insertion hole 11.

The inner peripheral surface of the large diameter part 11a and the outer peripheral surface of the insertion part 21 are shaped and sized to match each other precisely. The sleeve 2 further has a through hole through which a tool shank 3 is passed. This through hole is shaped to be precisely concentric with the outer periphery surface if the insertion part 21, and at the same time shaped and sized to match precisely the outer peripheral surface of the tool shank 3. In addition, through an appropriate range starting from where the large diameter part 11a ends (for example, a range of several cm along the axis; hereinafter also referred to as a "small diameter part"), the inner peripheral surface of the tool shank insertion hole is shaped and sized to match precisely the outer peripheral surface of the tool shank 3.

At the same time, an annular elastic member 4 is provided on an outer peripheral part of a bottom part of the large diameter part 11a of the tool shank insertion hole 11 (in a portion that becomes a space between the tool shank insertion hole 11 and the tool shank 3). An inner peripheral surface of the annular elastic member 4, in a natural state, (that is, not exposed to external force), is shaped and sized to match substantially precisely the outer peripheral surface of the tool shank 3. The tool shank 3 mounting/holding may be performed, for example, by the following procedure.

First, the tool shank 3 is passed through the through hole in the sleeve 2 and inserted into the tool shank insertion hole 11. Then, the insertion part 21 of the sleeve 2 is inserted in the large diameter part 11a and fixed coaxially on the spindle 1, in a manner described later. When the sleeve 2 is fixed on the spindle 1, the front end part of the insertion part 21 compresses the annular elastic member 4 coaxially, which causes the annular elastic member 4 to expand radially to hold and fix the tool shank 3 on the spindle 1.

Examining at which locations the tool shank 3 is supported, it can be seen that, first, the inner peripheral surface of a portion of the tool shank insertion hole 11 (the small diameter part described above) forms one shank-supporting portion (first shank-supporting portion A1), and the inner peripheral surface of the through hole of the sleeve 2 forms another shank-supporting portion (second shank-supporting portion A2). This "two-portion support" is the basic distinctive feature of the present invention, and with it the risk that the tool shakes due to the angle of insertion and the like and error arises in the orientation of the mounting substantially disappears. It should be noted that the inner peripheral surface of the annular elastic member 4 is a compressive part B that exerts compressive force on the outer periphery of the tool shank 3, and in that sense can also be called a third shank-supporting portion.

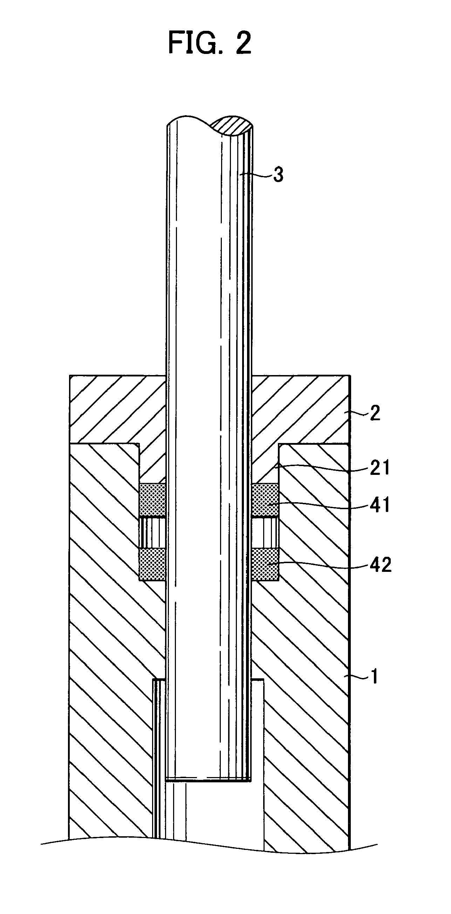

FIG. 2 is a diagram showing a sectional view along the axis of the spindle, illustrating a variation of the tool holding structure that provides multiple annular elastic members. As shown in FIG. 2, in the present variation, two annular elastic members 41, 42 are provided axially. As can be appreciated by those skilled in the art, besides the present variation, an arrangement can also be adopted in which the outer periphery of the tool shank 3 is enclosed by multiple elastic members. For example, a configuration is possible in which the outer periphery of the tool shank 3 is enclosed by two semicircular annular elastic members each extending through approximately 180 degrees.

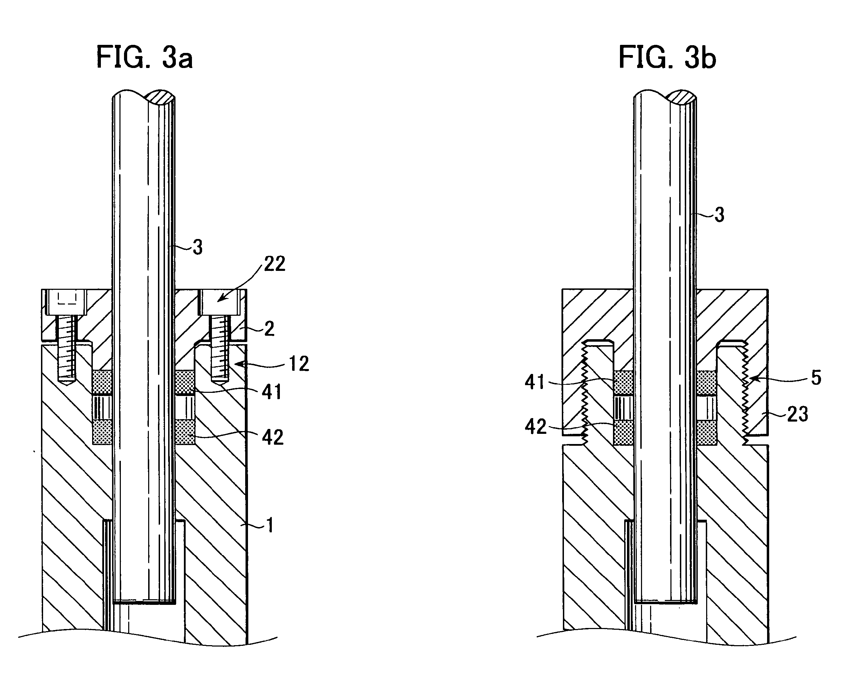

FIGS. 3a and 3b show examples of mechanisms for maintaining a constant force that compresses the annular elastic members. FIG. 3a shows an example in which the sleeve 2 that exerts a compressive force on the annular elastic members 41, 42 is fixed and chucked on the spindle with bolts 22 that engage tap holes 12. FIG. 3b shows an example in which the sleeve 2 is shaped so as to fit over the outer periphery of the spindle 1, in which a screw-nut structure 5 is formed by cutting a female tap in the outer periphery of the spindle 1 and cutting a male tap in the inner peripheral part of an umbrella part 23 of the sleeve 2 that covers the female tap, fitting the umbrella part 23 of the sleeve 2 to the outer periphery of the spindle 1 and fixing the sleeve 2 on the spindle 1. Such a structure compresses the annular elastic members 41, 42 and enables the holding force to be held constant.

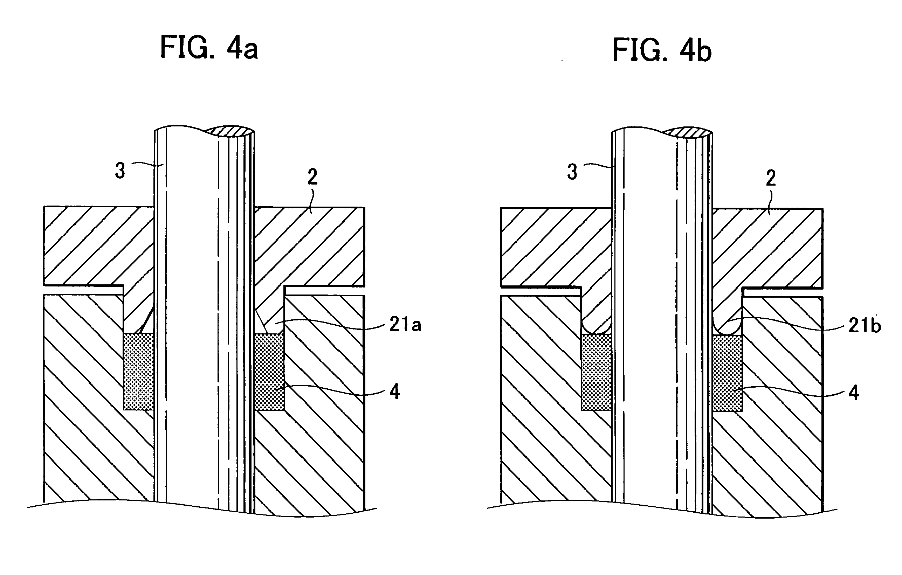

Next, FIGS. 4a and 4b show examples in which the shape of the front end part of the sleeve 2 (that is, the shape in axial cross-section of the side that applies compressive force to the elastic member) is modified so as to be able to compress the elastic member 4 more efficiently. FIG. 4a shows an example in which that shape is a trapezoid, with the front end surface forming a flat annular plane. FIG. 4b shows an example in which the shape is a semicircle, in which the front end surface is a curved plane in a raised annular shape. Compressing the elastic member 4 radially inward efficiently enables the holding force to be improved, and has the added advantage of extending the working life of the elastic member 4.

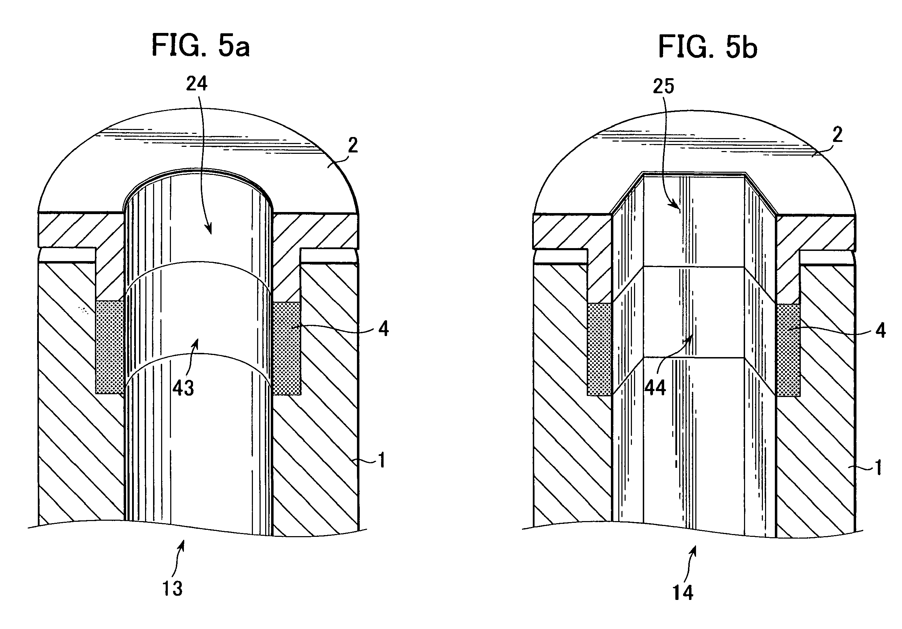

FIGS. 5a and 5b are diagrams showing a holding contact part of the tool holding structure, in which FIG. 5a shows a case in which the tool shank is circular in cross-section and FIG. 5b shows a case in which the tool shank is polygonal in cross-section. In either case, the shapes of the cross-sections of each of the inner peripheral surfaces 13, 14 of the tool insertion hole in the spindle 1, the inner peripheral surfaces 24, 25 of the through hole of the sleeve 2 and the inner peripheral surfaces 43, 44 of the elastic member 4 in directions perpendicular to the axial direction match the cross-sectional shapes of the tool shanks. Such shape selection enables the tool holding structure to accommodate not only rod-shaped shanks but also shanks that are polygonal in cross-section, such as triangular, quadrilateral, hexagonal or the like.

## Claims

1. A tool holding structure for holding and clamping a tool shank to a spindle of a machine tool, comprising:
a first shank-supporting portion provided by an inner peripheral surface of a part of a tool-shank insertion hole formed in the spindle;
a second shank-supporting portion provided by an inner peripheral surface of a through hole formed in a sleeve mounted coaxially at an distal end of the spindle;
at least one elastic member disposed between said first and second shank-supporting portions in a space formed between the tool shank insertion hole and the tool shank inserted therein; and
compressing means for compressing said elastic member axially to expand said elastic member radially so that the tool shank is held and clamped on the spindle.

2. A tool holding structure according to claim 1, wherein said elastic member has an annular shape.

3. A tool holding structure according to claim 1, wherein said compressing means comprises the sleeve being mounted at the distal end of the spindle to apply a compressive force for compressing said elastic member from a portion thereof in contact with said elastic member.

4. A tool holding structure according to claim 3, wherein the portion of the sleeve in contact with said elastic member has a semicircle or trapezoid shape in axial cross-section.

5. A tool holding structure according to claim 1, wherein the tool-shank insertion hole of the spindle, the through hole of the sleeve and said elastic member have cross-sections matched with cross-sections of the tool shank on planes perpendicular to an axis of the spindle.
